# EUROPEAN PATENT APPLICATION

(11) **EP 1 619 577 A1**
(43) Date of publication of application: **25.01.2006**
(21) Application number: 04017560.6
(22) Date of filing: 23.07.2004
(51) Int. Cl.: G06F 1/16

(54) **Notebook computer with detachable bezel of mainframe**

(71) Applicant: VAC Corporation, Taipei (TW)
(72) Inventor: Shih, Po-Tsung, Taipei (TW)
(74) Representative: Viering, Jentschura & Partner

(57) **Abstract**

A notebook computer has a display and a mainframe. The mainframe includes a frame and a bezel. The frame is used for mounting a mainboard and a plurality of electronic apparatuses therein. The display connects pivotally to the frame. The bezel has an upper shell and a bottom shell respectively mounted on an upper surface and a bottom surface of the frame. The present invention provides a notebook computer capable of exchanging a mainframe bezel thereof and having various appearances.

## Description

### BACKGROUND OF THE INVENTION

### 1. Field of the Invention

The present invention relates to a notebook computer with a detachable mainframe bezel, and especially to a notebook computer with a detachable mainframe bezel, which adapts to diversify the bezel corresponding to the mainframe and has the advantage of easy assembly or disassembly.

### 2. Description of the Related Art

Since fabrication technique is improved and prices are gradually reduced, desktop computers are being replaced by notebook computers, step by step. Consequently, the use of notebook computers is accessible to all. The aesthetic appearance of notebook computers is thus now of concern to manufacturers and consumers.

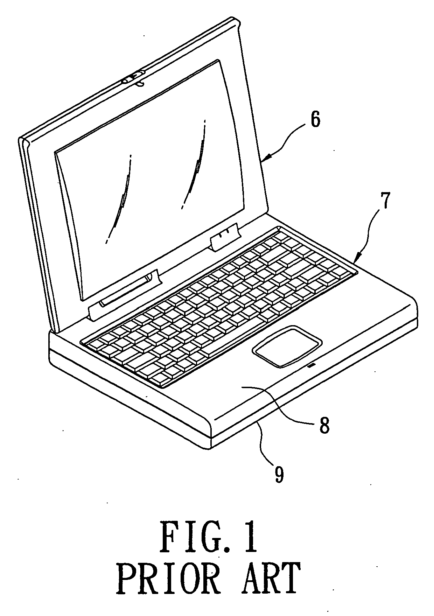

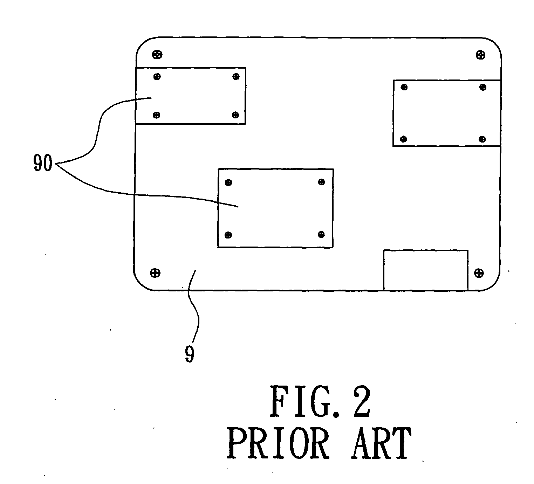

Referring to FIG. 1, a conventional notebook computer includes a display 6 and a mainframe 7. A fringe of the display 6 connects pivotally to a fringe of the mainframe 7. The mainframe 7 has a bezel including an upper shell 8 and a bottom shell 9, which defines a space therebetween. The space defined by the two shells 8, 9 is used for receiving a mainboard (not shown) and various of electronic apparatuses (such as hard disk or optical device and the like), with a fixing member (not shown) locking these devices on the upper shell 8 or the bottom shell 9. Referring to FIG. 2, the bottom shell 9 has a plurality of unequirotal cover boards 90 fixed thereon or fixed on the electronic apparatuses.

The above conventional notebook computer has disadvantages, however, since the mainboard and the pluralities of electronic apparatuses are locked on the upper shell 8 or the bottom shell 9, and the cover boards 90 are fixed on the bottom shell 9 or on the electronic apparatuses, therefore the upper shell 8 or the bottom shell 9 cannot be solely disassembled. As a kind of notebook computer of specific configuration, it lacks multiformity with respect to the appearance, thereby limiting its application types and preventing the manufacturer to set out products of various types and low prices for consumers to choose and buy.

Therefore, the conventional notebook computers mentioned above have drawbacks and inconveniences in manufacturing and practical use and should be improved.

### SUMMARY OF THE INVENTION

Accordingly, an object of the present invention is to provide a notebook computer capable of exchanging a mainframe bezel thereof, which have advantages that is convenient in assembly and disassembly, and can has various appearances.

Accordingly, a notebook computer in accordance with the present invention includes a display and a mainframe. The mainframe includes a frame and a bezel. The frame is used for mounting a mainboard and a plurality of electronic apparatuses therein. The display connects pivotally to the frame. The bezel includes an upper shell and a bottom shell respectively mounted on an upper surface and a bottom surface of the frame.

### BRIEF DESCRIPTION OF THE DRAWINGS

Other objects, advantages and novel features of the present invention will be apparent from the following detailed description of preferred embodiments thereof with reference to the attached drawings, in which:
FIG. 1 is a perspective view of a conventional notebook computer;
FIG. 2 is a bottom plan view of the conventional notebook computer of FIG. 1;
FIG. 3 is a perspective, assembled view of a notebook computer of the present invention;
FIG. 4 is a perspective, disassembled view of the notebook computer of FIG. 3;
FIG. 4A is a perspective, disassembled view of an upper shell and a frame of a mainframe of the notebook computer;
FIG. 4B is a perspective, disassembled view of a bottom shell and the frame of the mainframe of the notebook computer;
FIG. 4C is a perspective, disassembled view of the upper shell and the bottom shell of the mainframe of the notebook computer;
FIG. 5 is a top plan view of the upper shell of the mainframe of the notebook computer;
FIG. 6 is a bottom plan view of the upper shell of the mainframe of the notebook computer;
FIG. 7 is a top plan view of the frame of the mainframe of the notebook computer;
FIG. 8 is a bottom plan view of the frame of the mainframe of the notebook computer;
FIG. 9 is a top plan view of the bottom shell of the mainframe of the notebook computer; and
FIG. 10 is a bottom plan view of the bottom shell of the mainframe of the notebook computer.

### DETAILED DESCRIPTION OF THE PREFERRED EMBODIMENTS

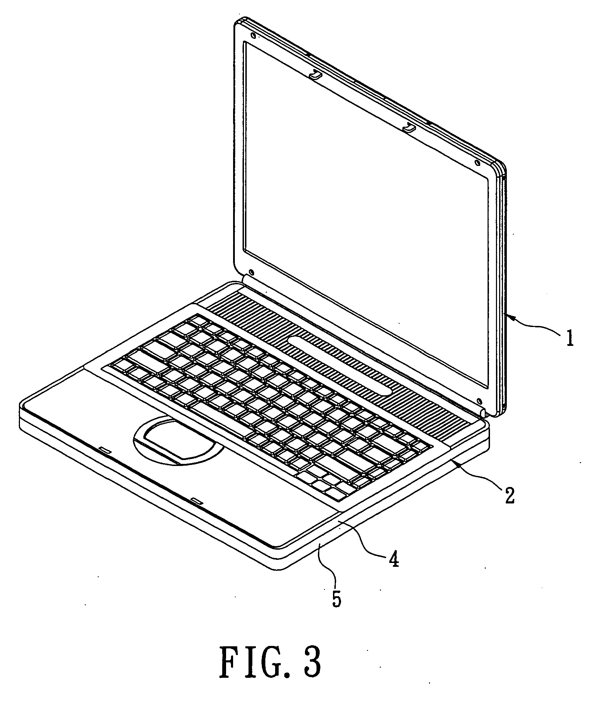

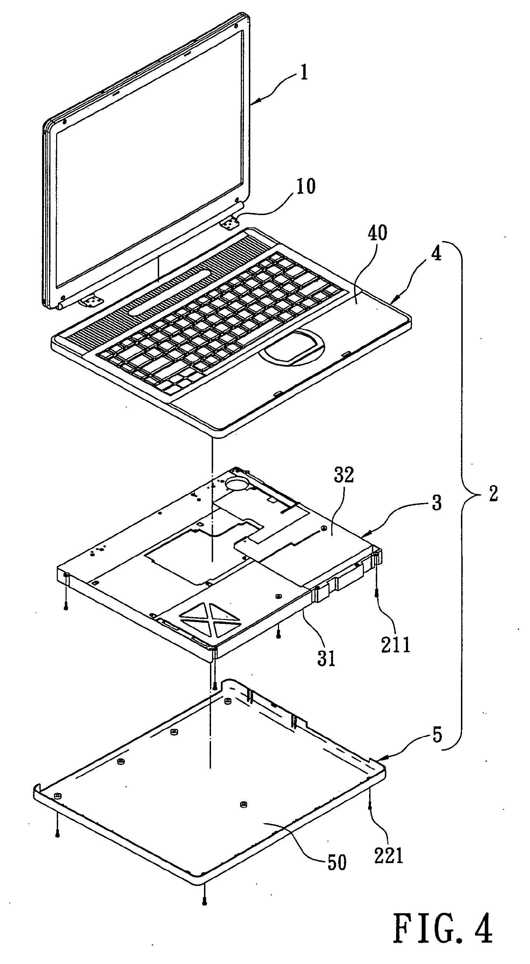

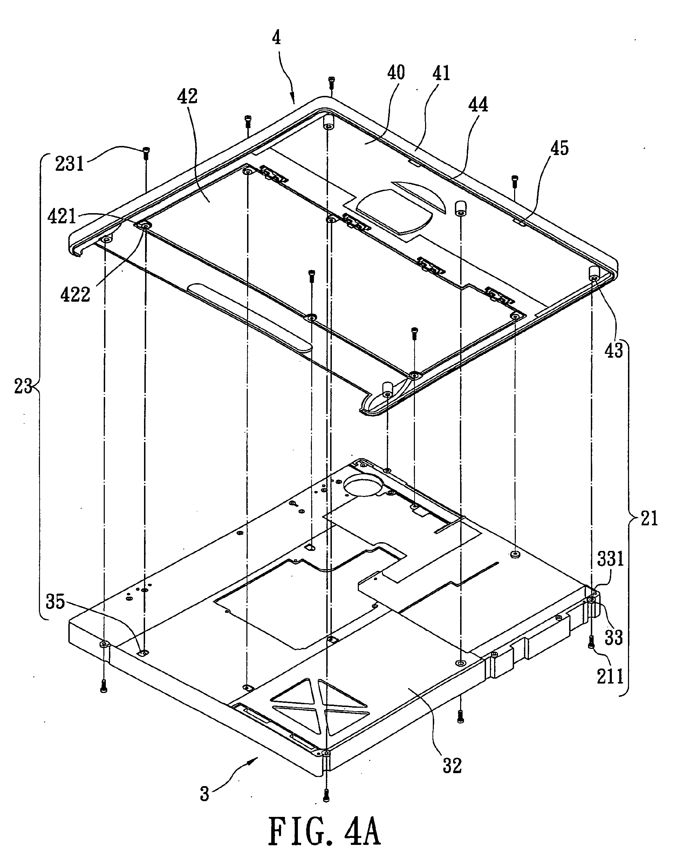

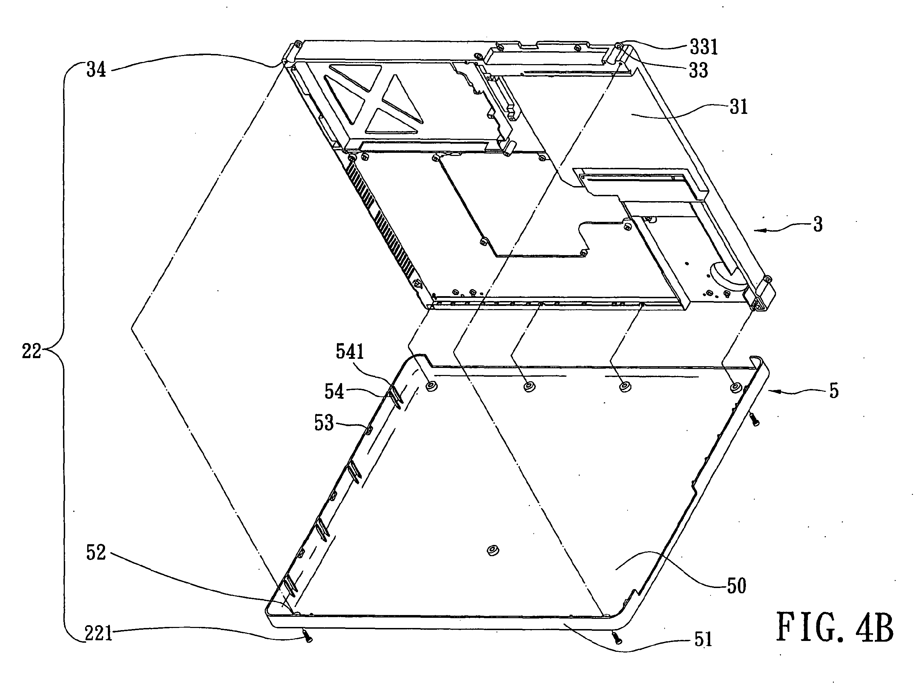

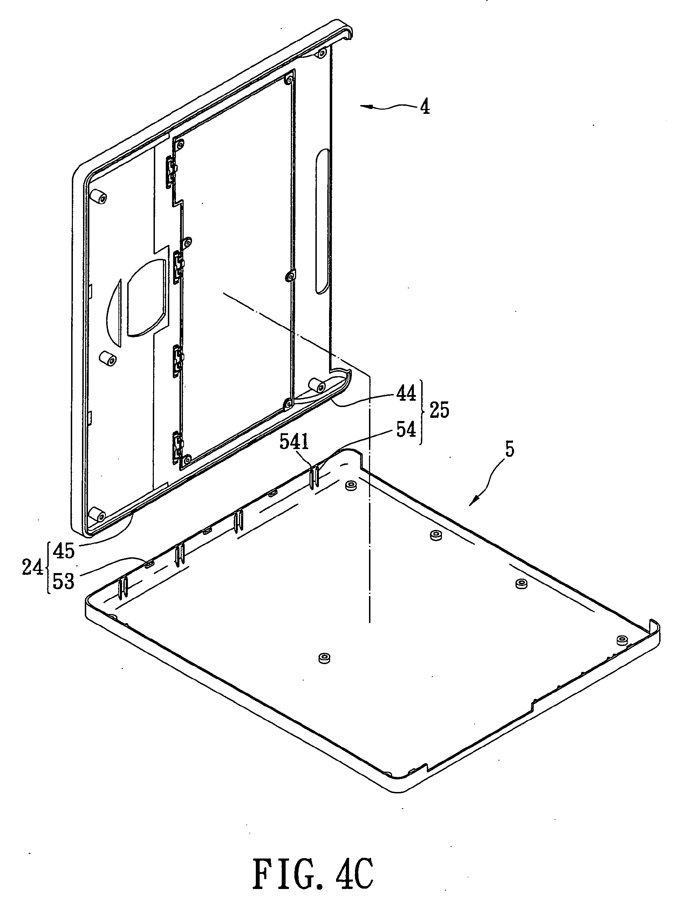

Referring to FIGS. 3 and 4, a notebook computer capable of exchanging a mainframe bezel thereof includes a display 1 and a mainframe 2. The mainframe 2 includes a frame 3 and a bezel. The frame 3 is used for mounting a mainboard (not shown) and a plurality of electronic apparatuses (not shown) therein. The electronic apparatus may be a hard disk or an optical device and the like. A pin-jointed structure 10 is disposed between the display 1 and the frame 3; in the embodiment, the pin-jointed structure 10 is a hinge connecting a side of the display 1 pivotally to a side of the frame 3. The bezel includes an upper shell 4 and a bottom shell 5. The upper shell 4 has a top plate 40 whose bottom surface is attached to an upper surface 32 of the frame 3. The bottom shell 5 has a bottom plate 50 whose upper surface is attached to a bottom surface 31 of the frame 3.

Referring to FIGS 4A to 4C, the mainframe 2 includes a first fixing structure 21, a second fixing structure 22, a third fixing structure 23, a hooking structure 24 and an alignment structure 25. The first fixing structure 21 and the third fixing structure 23 are both formed on the frame 3 and the upper shell 4 to fix the upper shell 4 on the upper surface 32 of the frame 3. The second fixing structure 22 is formed on the frame 2 and the bottom shell 5 to mount the bottom shell 5 on the bottom surface 31 of the frame 3. The hooking structure 24 and the alignment structure 25 are formed on the upper shell 4 and the bottom shell 5, assembling the upper shell 4 and the bottom shell 5 to form an accommodating space for receiving the frame 3. The first fixing structure 21, second fixing structure 22, third fixing structure 23, hooking structure 24 and the alignment structure 25 in accord with the embodiment of the present invention will be described in detail below .

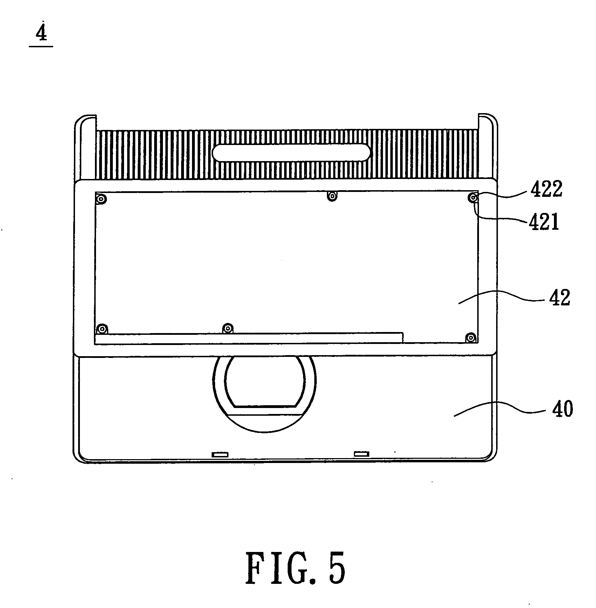

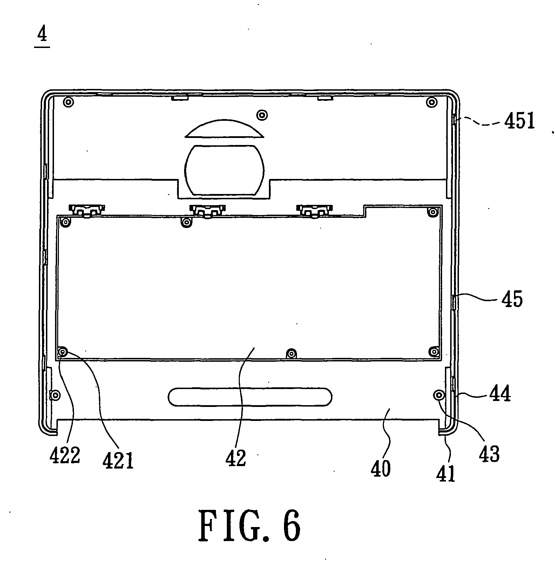

Referring to FIGS. 5 and 6, the top plate 40 of the upper shell 4 forms an opening 42 for mounting a keyboard therein (not shown); an inner side wall of the opening 42 of the upper shell 4 has an inner protrusion 421 with a third through hole 422 therein. A bottom surface of the top plate 40 of the upper shell 4 has a first fixing pedestal 43. The upper shell 4 has a first outer side wall 41 integrated with the top plate 40. The first outer side wall 41 comprises an alignment flange 44 and a hooking piece 45 formed thereon, and an outer surface of the hooking piece 45 has a concavity 451 therein.

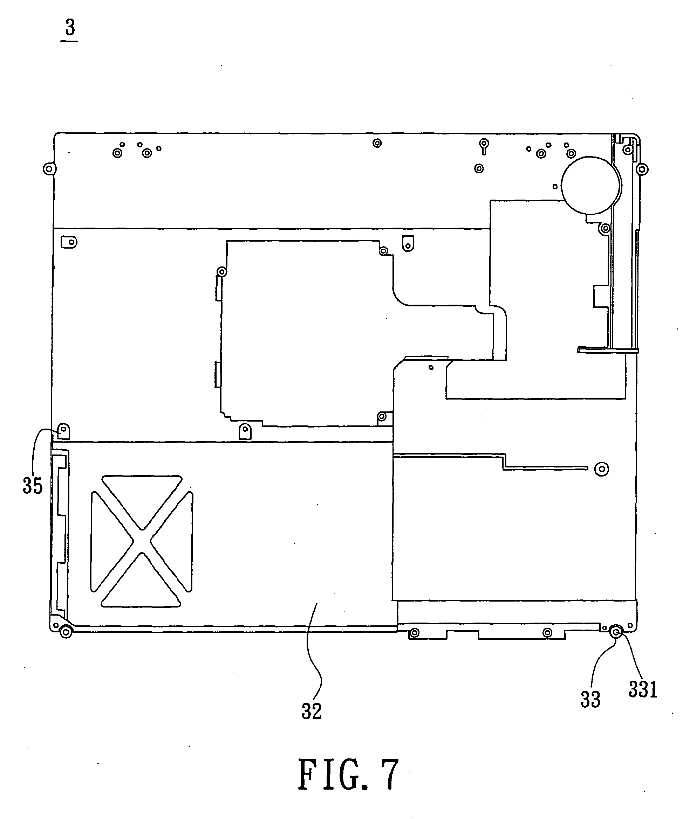

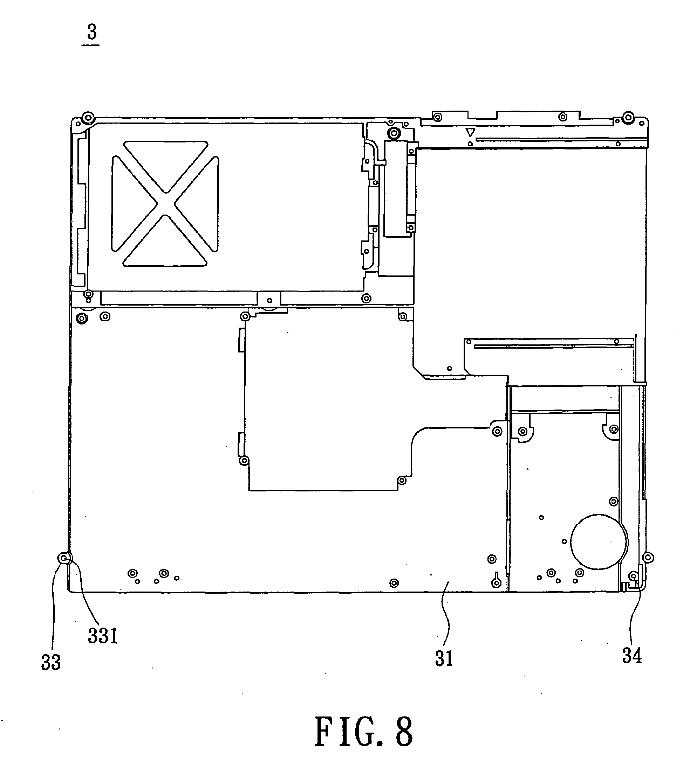

Referring to FIGS. 7 and 8, a periphery of the frame 3 has a protrusion 33 with a first through hole 331 therein. The bottom surface 31 of the frame 3 has a second fixing pedestal 34. The upper surface 32 of the frame 3 has a third fixing pedestal 35.

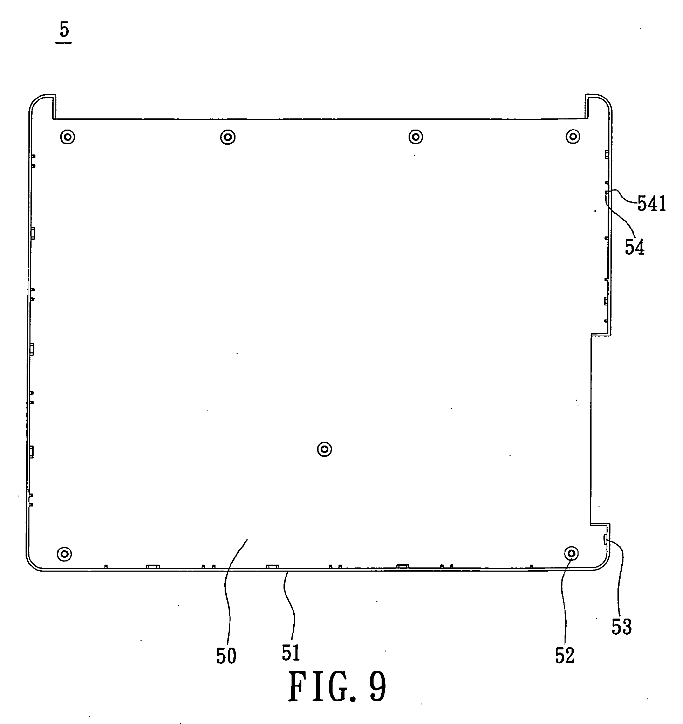

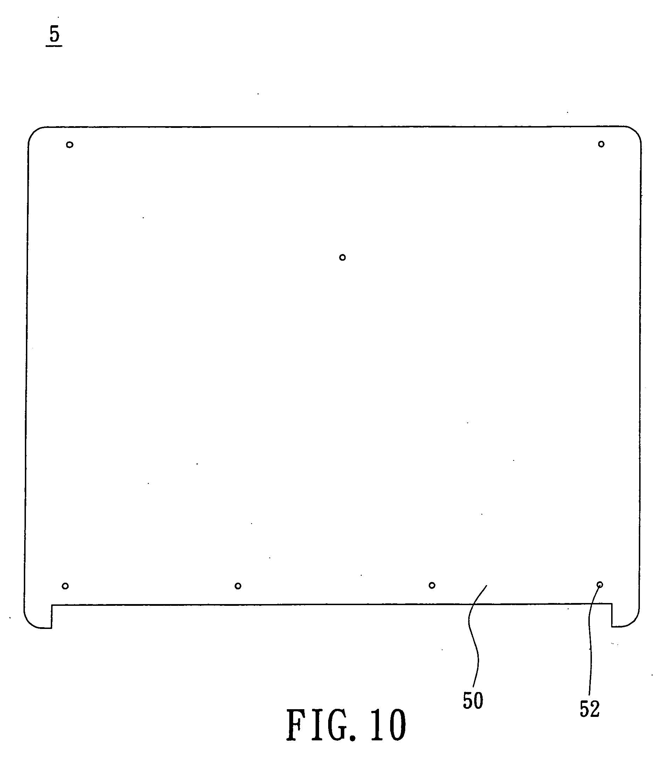

Referring to FIGS. 9 and 10, the bottom plate 50 of the bottom shell 5 has a second through hole 52 therein. The bottom shell 5 has a second outer side wall 51 integrated with the bottom plate 50. An inner surface of the second outer-side wall 51 is formed with a hooking bump 53 and an alignment piece 54; a gap 541 is formed between the alignment piece 54 and the second outer side wall 51.

Referring to FIGS. 4A and FIGS. 6 to 8, the mainframe 2 includes a first fastening member 211. The first fixing structure 21 includes the first fastening member 211, the protrusion 33 of the frame 3 and the first fixing pedestal 43 of the upper shell 4. In the embodiment, the first fastening member 211 is a screw, and the first fixing pedestal 43 is a screw pedestal.

Referring to FIGS. 4B and FIGS. 8 to 10, the mainframe 2 includes a second fastening member 221 and the second fixing structure 22 includes the second fastening member 221, the second through hole 52 of the bottom shell 5 and the second fixing pedestal 34 of the frame 3. In the embodiment, the second fastening member 221 is a screw, and the second fixing pedestal 34 is a screw pedestal.

Referring to FIGS. 4A, 5, 7, and 8, the mainframe 2 includes a third fastening member 231. The third fixing structure 23 includes the third fastening member 231, the inner protrusion 421 of the upper shell 4 and the third fixing pedestal 35 of the frame 3. In the embodiment, the third fastening member 231 is a screw, and the third fixing pedestal 35 is a screw pedestal.

Referring to FIGS. 4C, 6 and 9, the hooking structure 24 includes the hooking piece 45 of the upper shell 4 and the hooking bump 53 of the bottom shell 5. The alignment structure 25 includes the alignment flange 44 of the upper shell 4 and the alignment piece 54 of the bottom shell 5.

The assembly process of the notebook computer capable of exchanging the bezel of the mainframe 2 therein includes the following steps. First, the frame 3 is placed in the top plate 40 of the upper shell 4 and the first outer side wall 41, then the fastening member 211 is drilled through the first through hole 331 of the protrusion 33 and fastens the same to the first fixing pedestal 43 of the upper shell 4. The third fastening member 231 is drilled through the third through hole 422 of the inner protrusion 421 and fastens the same to the third fixing pedestal 35 of the frame 3. Thus, the first fixing structure 21 and the third fixing structure 23 firmly fix the upper shell 4 on the upper surface 32 of the frame 3. Next, the frame 3 is placed in the bottom plate 50 of the bottom shell 5 and the second outer side wall 51, then the alignment flange 44 of the upper shell 4 is locked in the gap 541 of the bottom shell 5, and the concavity 451 of the upper shell 4 hooks the hooking bump 53 of the bottom shell 5. Thus, the alignment structure 25 and the hooking structure 24 firmly fix the bottom shell 5 on the upper shell 4. Simultaneously, the second fastening member 221 is drilled through the second through hole 52 of the bottom shell 5 and fastens the same to the second fixing pedestal 34 of the frame 3. Thus, the second fixing structure 22 firmly fixes the bottom shell 5 on the bottom surface 31 of the frame 3. In disassembly, the second fastening member 221 is first removed to take off the bottom shell 5. The first fastening member 211 and the third fastening member 231 are then removed to take off the upper shell 4, thereby completing the disassembly of the bezel of the notebook computer. As seen above, the disassembly of the bezel of the notebook computer does not require removal of the mainboard and the electronic apparatuses within the mainframe 2. Thus, it is easily to attain various appearances of the notebook computer. A plurality of advantages of the present invention will be described below.

First, since the upper shell and the bottom shell can be respectively mounted on the upper surface and the bottom surface of the frame, the bezel of the mainframe is easily removed and does not influence the mainboard and the electronic apparatuses within the mainframe. Therefore, various configurations of mainframe can easily adapt to various bezels, and various appearances of the notebook computer can be attained. Meanwhile, the screws of the bezel provide the consumer with a DIY feeling, making the design provide fast, flexible and fresh configuration to order and DIY business model.

Second, the easy assembly and disassembly of the bezel of the mainframe enables the manufacturer of the notebook computer to provide more types of configurations of notebook computers to satisfy consumers, reducing costs simultaneously.

It should be apparent to those skilled in the art that the above description is only illustrative of specific embodiments and examples of the invention. The invention should therefore cover various modifications and variations made to the herein-described structure and operations of the invention, provided they fall within the scope of the invention as defined in the following appended claims.

## Claims

1. A notebook computer, comprising:
a display; and
a mainframe comprising a frame and a bezel, the frame being used for mounting a mainboard and a plurality of electronic apparatuses therein, the display connecting pivotally to the frame, the bezel comprising an upper shell and a bottom shell respectively mounted on an upper surface and a bottom surface of the frame.

2. The notebook computer as claimed in claim 1, wherein the mainframe has a first fixing structure formed on the frame and the upper shell to fix the upper shell on the upper surface of the frame.

3. The notebook computer as claimed in claim 2, wherein the mainframe comprises a first fastening member, a periphery of the frame having a protrusion with a first through hole therein, a bottom surface of the upper shell having a first fixing pedestal, the first fastening member, the protrusion with the first through hole and the first fixing pedestal defining the first fixing structure, and the first fastening member penetrating through the first through hole of the protrusion and being fastened to the first fixing pedestal of the upper shell.

4. The notebook computer as claimed in claim 1, wherein the mainframe has a second fixing structure formed on the frame and the bottom shell to mount the bottom shell on the bottom surface of the frame.

5. The notebook computer as claimed in claim 4, wherein the mainframe comprises a second fastening member, the bottom shell having a second through hole therein, the bottom surface of the frame having a second fixing pedestal, the second fastening member, the second through hole and the second fixing pedestal defining the second fixing structure, and the second fastening member penetrating through the second through hole of the bottom shell and being fastened to the second fixing pedestal.

6. The notebook computer as claimed in claim 1, wherein the mainframe comprises a hooking structure formed on the upper shell and the bottom shell, assembling the upper shell and the bottom shell to form an accommodating space for receiving the frame.

7. The notebook computer as claimed in claim 6, wherein the upper shell has a first outer side wall formed with a hooking piece, an outer surface thereof comprising a concavity, the bottom shell having a second outer side wall, an inner surface thereof including a hooking bump, and the concavity hooking the hooking bump, thus defining the hooking structure.

8. The notebook computer as claimed in claim 1, wherein the mainframe comprises an alignment structure formed on the upper shell and the bottom shell, aligning the upper shell and the bottom shell to form an accommodating space for receiving the frame.

9. The notebook computer as claimed in claim 8, wherein the upper shell has a first outer side wall formed with an alignment flange, the bottom shell having a second outer side wall, an inner surface thereof including an alignment piece, and a gap being formed between the alignment piece and the second outer side wall, and the alignment flange being locked in the gap, thus defining the alignment structure.

10. The notebook computer as claimed in claim 1, wherein the mainframe comprises a third fastening member, the mainframe having a third fixing structure formed on the frame and the upper shell, the upper shell forming an opening for mounting a keyboard therein, an inner side wall of the opening of the upper shell having an inner protrusion with a third through hole therein, the frame having a third fixing pedestal, the third fixing structure comprising the third fastening member, the inner protrusion and the third fixing pedestal, and the third fastening member penetrating through the third through hole of the inner protrusion of the upper shell and being fastened to the third fixing pedestal of the frame, the third fixing structure thus fixing the upper shell on the upper surface of the frame.
